# EUROPÄISCHE PATENTSCHRIFT

(11) **EP 0 731 851 B1**
(45) Veröffentlichungstag und Bekanntmachung des Hinweises auf die Patenterteilung: **12.07.2000**
(21) Anmeldenummer: 95929713.6
(22) Anmeldetag: 14.09.1995
(51) Int. Cl.: C22B 7/04, C22B 7/02, C22B 5/02, F27B 3/04

(54) **VERFAHREN ZUR AUFBEREITUNG VON FESTEN RÜCKSTÄNDEN AUS MÜLLVERBRENNUNGSANLAGEN UND VORRICHTUNG ZUR DURCHFÜHRUNG DES VERFAHRENS**
METHOD OF PROCESSING SOLID RESIDUES FROM WASTE-INCINERATION PLANTS AND A DEVICE FOR CARRYING OUT THE METHOD
PROCEDE ET DISPOSITIF POUR LE TRAITEMENT DE RESIDUS SOLIDES D'INSTALLATIONS D'INCINERATION DE DECHETS

(30) Priorität: 29.09.1994 CH 294594
(43) Veröffentlichungstag der Anmeldung: 18.09.1996
(73) Patentinhaber: Von Roll Umwelttechnik AG, 8005 Zürich (CH); HOLDERBANK FINANCIERE GLARUS AG, CH-8750 Glarus (CH)
(72) Erfinder: PFLÜGL, Karl-Heinz, D-01689 Weinböhla (DE); KIETHE, Norbert, D-01468 Friedewald (DE); HUGENTOBLER, Ernst, CH-8615 Wermatswil (CH); RÜEGG, Hans, CH-5610 Wohlen (CH); FREY, Ruedi, CH-8307 Effretikon (CH); MAYER, Anton, A-8700 Leoben (AT); REY, Theo, CH-5000 Aarau (CH); EDLINGER, Alfred, CH-5400 Baden (CH)
(74) Vertreter: Patentanwälte Schaad, Balass, Menzl & Partner AG
(86) Internationale Anmeldenummer: CH9500204
(87) Internationale Veröffentlichungsnummer: WO9610097

(56) Entgegenhaltungen:
- EP-A- 0 515 792
- EP-A- 0 572 769
- EP-A- 0 653 496
- AU-B- 557 595
- DE-A- 3 420 372

## Beschreibung

Die Erfindung betrifft ein Verfahren zur Aufbereitung von festen Rückständen, wie Schlacke, Flugasche und Filterstäube, aus Müllverbrennungsanlagen nach dem Oberbegriff des Patentanspruchs 1 und eine Vorrichtung zur Durchführung des Verfahrens nach dem Oberbegriff des Patentanspruchs 10.

In Müllverbrennungsanlagen fallen ungefähr 30 bis 35% der verbrannten Müllmenge als Schlacken an. In dieser Schlacke befinden sich noch bis zu 5% unverbrannte organische Bestandteile und etwa 5 bis 10% verschiedene Metalle, wovon hauptsächlich Eisen. Gegenwärtig wird die Schlacke nach einer entsprechenden mechanischen Aufbereitung deponiert oder im Tiefbau, z.B. Strassenbau, als Grundmaterial weiterverwendet. Andere, feinere feste Rückstände wie Flug- und Kesselasche und Filterstaub müssen getrennt entsorgt werden und gelangen dazu auf Sondermülldeponien. Eine weitere Aufbereitung dieser Abfälle findet in der Regel nicht statt. Unverbrannte organische Anteile sowie wasserlösliche Schwermetallverbindungen in der Schlacke führen zu zusätzlichen Problemen bei der Weiterverwendung oder Ablagerung, da sie zu einer unzulässigen Belastung der Gewässer führen.

Die Überführung der festen Rückstände aus den Müllverbrennungsanlagen durch Einschmelzen in einen glasartigen Zustand beseitigt die Nachteile der umweltbelastenden Rohschlacke. Dabei werden die organischen Bestandteile verbrannt und die noch verbleibenden Schwermetalle und andere umweltbelastende Abfälle in einer wasserunlöslichen Glasmatrix eingebunden. Der Einschmelzvorgang erfolgt in herkömmlichen Glasschmelzanlagen, wozu jedoch eine aufwendige Aufbereitung der Rohschlacke erforderlich ist, wobei unter anderem das Eisen über Magnetabscheider entfernt und die Schlacke gebrochen und klassiert werden muss. Das bei diesem Verfahren als Granulat anfallende Glas wurde bis vor kurzem noch im Bauwesen eingesetzt. Aufgrund der höheren Anforderungen an den Umweltschutz darf ein solches Granulat nicht mehr ohne weiteres für Bauzwecke wie für den Strassenbau eingesetzt werden.

Es sind bereits verschiedene Vorschläge zur Lösung dieser Probleme vorgelegt worden. Beispielsweise sind grundsätzliche Überlegungen zur Inertisierung von Rückständen, insbesondere von Metallen und Schwermetallen, durch Schmelzprozesse aus dem Standardwerk "Müllverbrennung und Umwelt" Band 4 von Prof.Dr.Ing. Karl J. Thomé-Kozmiensky im EF-Verlag für Energie und Umwelttechnik GmbH, Berlin (1990), Seiten 339 bis 359 zu entnehmen. Auf Seite 350 wird angeregt, diese Schwermetalle durch Dichtetrennung von der Restschmelze zu separieren, wobei auf andere Elektroschmelzverfahren hingewiesen wird, ohne jedoch eine weitere Beschreibung dieses Verfahrens anzugeben.

Aufbauend auf dieser Grundlage ist in der Deutschen Patentschrift DE-C-41 17 444 ein Verfahren offenbart, bei welchem die festen Rückstände wie Rostasche, Kesselasche und Filterstaub aus einer Abfallverbrennungsanlage in einen Vorlagebunker zwischengelagert und von Eisenschrott durch einen Magnetabscheider befreit werden. Dieser Schrott wird anschliessend mechanisch verkleinert. Es versteht sich, dass für die Aussortierung von Eisenschrott und anderen grösseren Teilen die Schlacke weitgehend abgekühlt sein muss, oder dass zumindest bei der Lagerung eine Abkühlung erfolgt. Anschliessend werden die (abgekühlten) festen Rückstände einem Schmelzofen zugeführt, in dem sie unter Zufuhr von Energie kontinuierlich eingeschmolzen werden. Am Boden dieses Schmelzofens wird die mit Metallen angereicherte Schmelze diskontinuierlich abgezogen und die Restschmelze an einer Seitenwand des Schmelzofens abgezogen und gekühlt, wodurch eine glasartiges Produkt entsteht.

Ein ähnliches Verfahren ist aus der EP-A-0 572 769 bekannt, bei welchem die Rückstände aus der Kehricht- oder Müllverbrennung mit einer Temperatur zwischen 600 bis 900°C durch Austragen in Wasser auf etwa 80°C abgekühlt und in einem Bunker zwischengelagert werden. In einem Reaktor werden die Rückstände auf eine Temperatur von über 1000°C aufgeheizt, wodurch die flüchtigen Metalle und Metallverbindungen gasförmig entweichen. Die Verbindungen von metallischen Elementen, insbesondere Schwermetallen, werden zunächst oxidiert und anschliessend reduziert. Eisen und die in Eisen lösliche Metalle werden in einer Schmelze im Reaktor gesammelt. Aus der verbleibenden Schlacke soll ein umweltverträgliches Produkt entstehen mit latent hydraulischen und/oder puzzolanischen Eigenschaften, wozu die im geschmolzenen Zustand dem Reaktor entnommene Schlacke abgeschreckt und granuliert wird. Dieses Produkt wird als mineralisches Bindemittel Zement oder Beton beigemischt. Als Reaktor ist ein kippbarer Konverter beschrieben, der kugelförmig ist, und im unteren Bereich die Metallschmelze und darüber die Restschmelze enthält. Aus einer konisch zulaufenden Mündung oben am Konverter soll durch allmähliches Kippen zunächst die geschmolzene Schlacke oder Restschmelze abgezogen werden und anschliessend das Metallbad oder die Metallschmelze in eine geeignete Pfanne zum weiteren Transport geschüttet werden.

Die in den vorgenannten Druckschriften angegebenen Lösungen, um die festen Rückstände aus Müllverbrennungsanlagen für eine Wiederverwendung aufzubereiten, haben u.a. den Nachteil, dass viele verschiedene Zwischenschritte wie z.B. Zwischenlagerung und Magnetabscheidung von magnetischen Metallen, notwendig sind, ausserdem enthält das erhaltene Glas noch Metalle.

Aus der DE-A1-34 20 372 ist ein Verfahren zur Anreicherung von Nichteisenmetallen bekannt. Dabei wird dem schmelzflüssigen Nichteisenmetall bzw. Schlacke zuerst mit oxydierenden und dann mit reduzierenden Gasen behandelt. Die Schlacke mit den verschlackten Verunreinigungen wird aus der Oxydationsstufe und das raffinierte Metall aus der Reduktionsstufe abgezogen.

Der vorliegenden Erfindung liegt deshalb die Aufgabe zugrunde, ein Verfahren und eine Vorrichtung zur einwandfreien Entfernung der Schwermetalle aus den festen Rückständen, die bei einer Müllverbrennungsanlage anfallen, vorzuschlagen.

Diese Aufgabe wird durch die Merkmale des kennzeichnenden Teils der Patentansprüche 1 und 10 gelöst.

Die erfindungsgemässe Aufteilung in drei Ofenzonen ermöglicht eine wesentlich verbesserte Abtrennung von Schwermetallen von der Schmelze. Gleichzeitig ist der Energieaufwand erheblich geringer als bei den oben erwähnten Verfahren und Anlagen. Ferner können dadurch die verschiedenen Prozesse wie Oxydation, Reduktion und Absetzen der Restschmelze besonders gut beherrscht werden. Auch die Flexibilität des Prozesses macht eine sofortige Anpassung bei einer veränderten Zusammensetzung der Schlacke möglich. Weil die Aufbereitung erfindungsgemäss vorzugsweise anschliessend an die Müllverbrennungsanlage stattfindet und die festen Rückstände in heissem Zustand direkt der Aufbereitungsanlage zugeführt werden, entsteht eine erhebliche Energieeinsparung.

Die während des Schmelz- und Oxidationsvorgangs in der ersten Heizkammer entstehenden gasförmigen Stoffe können im Gegenstrom zur herabfallenden Schlacke in den Müllverbrennungsofen zurückgeführt werden. Da diese Gase im allgemeinen eine Temperatur von 1100°C bis 1600°C aufweisen, wird die Temperatur im Müllverbrennungsraum, insbesondere im unteren Teil des Rostes, stark erhöht, so dass ein vollständiger Ausbrand und ein erhöhter Wirkungsgrad erreicht wird. Diese Gase gelangen dann gemeinsam mit den Gasen der Müllverbrennungsanlage in eine Abgasreinigung, so dass eine separate Abgasreinigung für die erste Heizkammer entfällt.

Weitere bevorzugte Ausführungsformen der Erfindung bilden den Gegenstand der abhängigen Ansprüchen 2 bis 9 und 11 bis 18. Zusätzliche Vorteile der Erfindung können aus der nachfolgenden Beschreibung entnommen werden.

Anhand der in den Zeichnungen dargestellten Beispielen wird nun die Erfindung näher erläutert. Es zeigen rein schematisch:
- Fig. 1: eine erste Vorrichtung gemäss der Erfindung
- Fig. 2: eine zweite Vorrichtung gemäss der Erfindung.

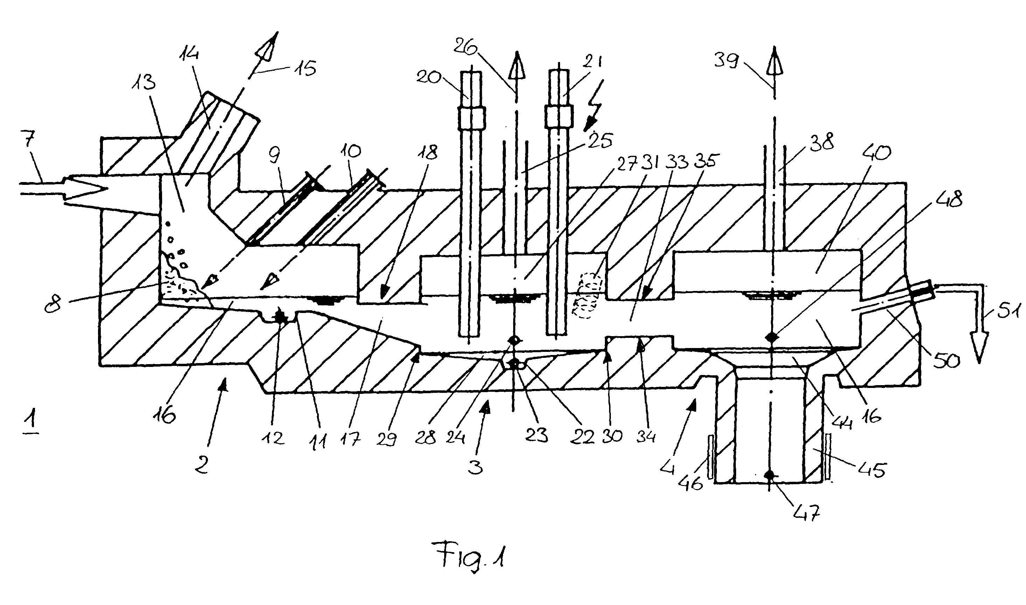

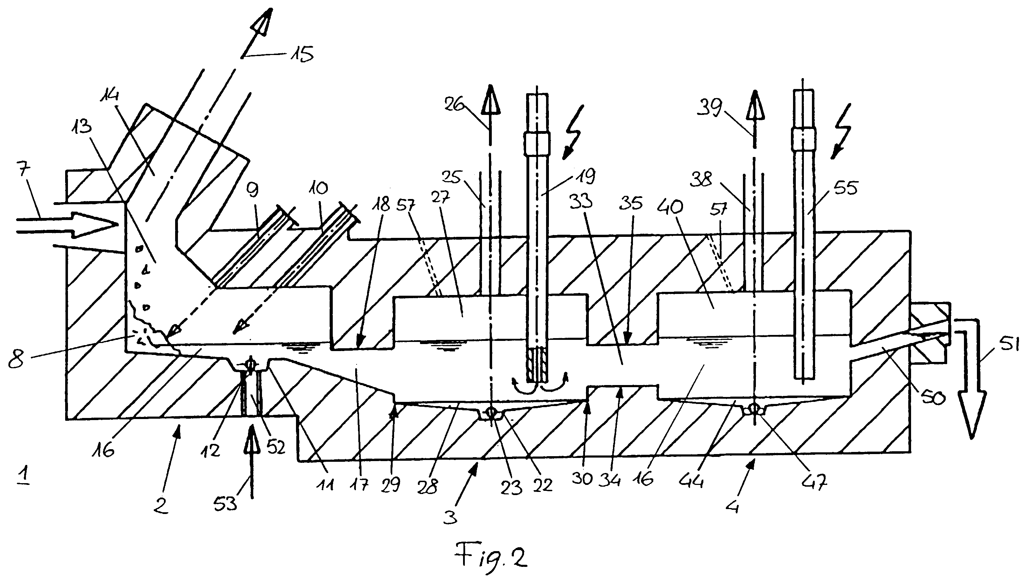

In den Figuren bezeichnen dieselben Bezugszeichen dieselben Elemente, so dass Erklärungen zu Figur 1 auch für Figur 2 gelten, wenn nichts anderes angegeben ist.

In Figur 1 ist ein Schmelzofen 1 mit drei zylindrischen Heizkammern 2, 3 und 4 dargestellt. Eine mit dem Pfeil 7 angedeutete Rutsche, die von einer hier nicht abgebildeten Müllverbrennungsanlage herkommt, mündet in die erste Heizkammer 2. Über die Rutsche 7 wird die Schlacke der Müllverbrennung auf eine Schüttung 8 dosiert. Im oberen Bereich sind zwei schräg in die erste Heizkammer 2 mündende, mit öl oder Gas betriebene Sauerstoffbrenner 9 und 10 als Heizeinrichtung vorgesehen, die die Schlacke auf eine Temperatur von im allgemeinen 1400°C bis 1600°C, vorzugsweise um 1550°C, aufheizen. Es kann aber auch eine andere Art der Beheizung eingesetzt werden, wie beispielsweise eine elektrische Beheizung, wobei der Schlacke gleichzeitig Sauerstoff zugeführt wird. Ausserdem kann eine fossile Beheizung mit vorgewärmter Luft zur Anwendung kommen. Im unteren oder Bodenbereich der ersten Heizkammer 2 ist ein konischer Sammelschacht 11 mit einer Abstichöffnung 12 vorgesehen, über welche flüssige Metalle periodisch abgezogen werden können und über welche die erste Heizkammer 2 für Revisionsarbeiten entleert werden kann.

In ihrem Durchschnitt ist die erste Heizkammer 2 als liegendes L ausgebildet und hat einen sogenannten Oberofen 13 im kürzeren Abschnitt des L. In diesem Oberofen 13 ist ein Abgaskanal 14 angeschlossen, der die bei der Aufheizung entstehende, mit dem Pfeil 15 angedeutete gasförmige Stoffe in den - hier nicht dargestellten - Verbrennungsraum der Müllverbrennungsanlage zurückführt. Diese heissen gasförmigen Stoffe 15 tragen zu einer wesentlichen Temperaturerhöhung im (nicht dargestellten) Müllverbrennungsraum bei, insbesondere im unteren Teil des Rostes, so dass hier eine nahezu vollständige Verbrennung des Mülls stattfindet.

Über einen ersten, beheizten Durchlass 17 läuft die Schmelze 16 in die zweite Heizkammer 3, die etwas tiefer liegt als die erste Heizkammer 2, so dass die Schmelze 16 nicht zurückfliessen kann. Im oberen Bereich des Durchlasses 17 ist eine Abstreifrippe 18 vorgesehen, die die auf der Schmelze 16 schwimmende Galle zurückhält und welche die Trennung der Gasräume in den beiden Heizkammern 2 und 3 oberhalb der Schmelze 16 sicherstellt. In dieser zweiten Heizkammer 3 sind nun von oben her drei oder vier vertikale Heizelektroden, von denen nur zwei 20 und 21 dargestellt sind, angeordnet, die als Widerstandsheizung die Temperatur der Schmelze 16 konstant halten. Bei den Heizelektroden 20, 21 handelt es sich um Graphit-Elektroden mit guter elektrischer Leitfähigkeit. An Stelle der dargestellten Art der Heizung können andere Gleich- oder Wechselstromheizungen zur Anwendung kommen.

Im Bodenbereich dieser zweiten Heizkammer 3 ist ebenfalls ein konischer Sammelschacht 22 mit einer Abstichöffnung 23 vorgesehen, um die dort gesammelte Schmelze 16 aus Eisen und Schwermetallen und Metallverbindungen, insbesondere Nickel, Chrom und Kupfer, in einem Eisenbad 28 an geeigneter Stelle periodisch, d.h. diskontinuierlich, abstechen zu können. Oberhalb der Abstichöffnung 23 ist eine weitere Auslassöffnung 24 vorgesehen, die eine Entleerung der zweiten Heizkammer 3 für Revisionsarbeiten oder dergleichen ermöglicht.

Im oberen Bereich der zweiten Heizkammer 3, als Oberofen 27 bezeichnet, ist ein Abzugskanal 25 angebracht für mit dem Pfeil 26 angedeutete, entweichende gasförmige Stoffe, wie Schwermetalldämpfe. Das in der Schmelze 16 befindliche Eisenbad 28 wird in der zweiten Heizkammer 3 durch zwei vorstehende Absätze 29 und 30 abgegrenzt. Gestrichelt angegeben ist noch eine Förderschnecke 31, die gasdicht in die zweite Heizkammer 3 mündet, und die zur Einleitung von weiteren feinteiligen Rückständen aus der Müllverbrennungsanlage, wie Flug- und Kesselasche und Filterstäube, dient.

Ein zweiter beheizter Durchlass 33 mit gleichbleibendem Querschnitt leitet die Schmelze 16 in die dritte Heizkammer 4 über. Dieser Durchlass 33 weist unten eine Schwelle 34, die links den vorstehenden Absatz 30 in der zweiten Heizkammer 3 bildet, und oben eine Abstreifrippe 35 auf, um die weitere Galle auf der Schmelze 16 aufzuhalten. Im oberen Bereich der dritten Heizkammer 4, auch mit Oberofen 40 bezeichnet, ist ein Abzugskanal 38 für mit dem Pfeil 39 angedeutete, entweichende gasförmige Stoffe vorgesehen. Ein Eisenbad 44 von sedimentierten geschmolzenen Schwermetallen befindet sich in einem zylindrischen Behälter 45, der im unteren Bereich der dritten Heizkammer 4 vorgesehen ist. Das Eisenbad 44 wird mittels aussenliegender Spulen 46 induktiv beheizt. Das heisse Metall gibt seine Wärme an die darüberliegenden Schmelze 16 ab und sorgt so für die Aufrechterhaltung der Temperatur in der Schmelze 16. Im unteren Bereich des Behälters 45 wird das Eisenbad 44 über eine Abstichöffnung 47 ebenfalls periodisch abgestochen. Für Revisionsarbeiten oder dergleichen ist im oberen Bereich der dritten Heizkammer 4 eine weitere Auslassöffnung 48 vorgesehen. Auf der rechten Seite der dritten Heizkammer 4 ist ein als Syphon ausgebildeter, leicht schräg nach oben verlaufender Auslass 50 vorhanden, um die von Schwermetallen befreite Glasschmelze 16 abzuziehen. Anschliessend wird die Schmelze kontinuierlich in ein hier nicht mehr dargestelltes Bad mit Kühlflüssigkeit, beispielsweise Wasser, geleitet und dort abgeschreckt. Dadurch entsteht ein glasförmiges Granulat, das als Baustoff, insbesondere als Klinkerersatz in der Zementindustrie eingesetzt werden kann.

Die Abzugskanäle 25 und 38 in der zweiten und in der dritten Heizkammer 3 und 4 können je mit einer separaten oder zusammen mit einer gemeinsamen Abgasreinigungseinrichtung verbunden sein (hier nicht weiter dargestellt).

Der in der Figur 2 dargestellte Schmelzofen 1 ist im Aufbau im wesentlichen gleich mit dem in Figur 1 dargestellten, so dass nur die veränderten oder zusätzlichen Elemente näher angedeutet werden. Im Bodenbereich der ersten Heizkammer 2 ist eine schematisch angedeutete Düsenöffnung 52 angeordnet, durch die mit dem Pfeil 53 angedeuteter zusätzlicher Sauerstoff zugeführt wird, um die Oxidation von geschmolzenen Metallen im konischen Sammelschacht 11 zu bewirken. An Stelle der Düsenöffnungen können auch Lanzen für diese Sauerstoffeinführung vorgesehen sein. Ferner ist in der zweiten Heizkammer 4 eine der vertikalen Graphit-Elektroden 19 hohlzylindrisch ausgebildet. Durch die hohlzylindrische Heizelektrode 19 können Flug- und Kesselasche und Filterstaub aus der Müllverbrennungsanlage eingeführt werden, die so in die Schmelze 16 gelangen und damit ebenfalls in der nachher gebildeten Glasmatrix eingebunden werden. Die dritte Heizkammer 4 ist ebenfalls mit einer Graphit-Elektrode 55 als Widerstandsheizung ausgerüstet, durch welche sie auf der erforderlichen Temperatur von z.B. 1300°C bis 1500°C gehalten wird. In diesem Fall ist die dritte Heizkammer 4 ohne zylindrischen Behälter 48 ausgebildet und ist die Abstichöffnung 47 höher als in der Figur 1 angeordnet. Ueber bloss gestrichelt angedeutete, als dünne Rohren ausgebildete Lanzen 57 im oberen Bereich der zweiten Heizkammer 3 und der dritten Heizkammer 4 kann zusätzlich noch ein reduzierendes oder bezüglich der Schmelze 16 inertes Schutzgas eingeleitet werden, um eine Reoxidation von Schwermetallen zu verhindern. Diese Lanzen 57 können ebenfalls an entsprechender Stelle der Heizkammer 3 und 4 in Figur 1 vorgesehen sein. Ansonsten ist der Aufbau dieses Schmelzofens 1 derjenige der Figur 1 gleich.

Die Funktionsweise des oben beschriebenen Schmelzofens 1 ist nun wie folgt:

Die heisse Schlacke aus der Müllverbrennungsanlage wird in der ersten Heizkammer 2 auf eine Temperatur beispielsweise von etwa 1550°C aufgeheizt, wodurch die festen Rückstände der Schlacke schmelzen. Gleichzeitig werden organische Bestandteile der Schlacke verbrannt und Metalle und/oder Metallverbindungen oxidiert. Die oxidischen Bestandteile der heissen Schlacke schmelzen in der ersten Heizkammer 2 sehr schnell ein und die in der Schlacke enthaltenen Metalle, hauptsächlich Eisen, welche beim Schmelzen nicht oxidiert werden, sinken infolge des Dichteunterschiedes in den konischen Sammelschacht 11. Zusätzlich kann Sauerstoff durch die Düsenöffnung 52 (Fig. 2) oder andere Zuführelemente in die erste Heizkammer 2 eingeleitet werden. Dadurch wird eine vollständige Oxidation der Metalle und Metallverbindungen erzielt. Die dabei freiwerdende Reaktionswärme wird zum Schmelzen der Schlacke in der ersten Heizkammer 2 ausgenützt.

Die Metallschmelze wird dann an der Abstichöffnung 12 abgestochen. Die beim Schmelz- und Oxidationsvorgang in der ersten Heizkammer 2 entstehenden heissen Gase 15 werden im Gegenstrom zur herabfallenden Schlacke über den Abgaskanal 14 dem Verbrennungsraum der Müllverbrennungsanlage zugeführt. Da die heissen Gase 15 eine Temperatur von 1100°C bis 1600 °C aufweisen, bewirken sie eine Erhöhung der Temperatur im Müllverbrennungsraum, insbesondere im unteren Teil des Rostes, was zu einem vollständigen Ausbrand und zu einem höheren thermischen Wirkungsgrad der Anlage führt. Die heissen Gase 15 gelangen gemeinsam mit den Gasen der Müllverbrennung in die Abgasreinigungsanlage, so dass keine separate Abgasreinigung für die erste Heizkammer 2 notwendig ist.

Die Schmelze 16, in welcher Schwermetall- und Eisenoxide gelöst sind, gelangt dann über den (ev. beheizten) Durchlass 17 in die zweite Heizkammer 3. Der Oberofen 27 über der Schmelze 16 ist durch die Abstreifrippe 18 hermetisch vom Oberofen 13 der ersten Heizkammer 2 abgeschlossen. Die Schmelze 16 wird in diesem Bereich über die Lanze 57 (Fig. 2) mit einer reduzierenden Atmosphäre beaufschlagt. In der Heizkammer 3 werden der Schmelze 16 Reduktionsmittel zugesetzt, die zunächst edlere Schwermetalloxide und dann Eisenoxid zu Metall reduzieren. Die Metalle verdampfen und/oder sinken aufgrund ihrer hohen Dichte in den konischen Sammelschacht 22.

Die Redoxvorgänge werden durch die von den Heizelektroden 20 und 21 (Fig. 1) oder 19 (Fig. 2) ausgehenden starken Konvektionsströmungen aktiv unterstützt. Der Reduktionsgrad der Schmelze 16 kann durch die Menge der Reduktionsmittel eingestellt werden. Im reduzierend eingestellten, hermetisch nach aussen abgeschlossenen Oberofen 27 können die verdampften Schwermetalle nicht wieder oxidieren. Sie werden dort über den Abzugskanal 25 abgezogen und in einer separaten (hier nicht dargestellten) Reinigunganlage ausgesondert. Sie liegen dann in konzentrierter Form vor und werden der Wiederverwendung zugeführt. Im konischen Sammelschacht 22 können die abgesetzten Metalle, vorwiegend Kupfer-Eisen-Schwermetalllegierungen, über die Abstichöffnung 23 abgestochen werden.

Es können über die Förderschnecke 31 (Fig. 1) oder über die hohle Heizelektrode 19 (Fig. 2) weitere, feinteilige Rückstände wie Flug- und Kesselasche und Filterstaub oder dergleichen aus der Müllverbrennungsanlage eingeführt werden. Um diese feinen Rückstände aus der Müllverbrennung staubfrei in die Schmelze 16 einzuführen, können diese in einem hier nicht weiter dargestellten und beschriebenen Presseinrichtung zu pillen- oder kugelförmigen Presslingen verdichtet werden und erst dann über die Förderschnecke 31 (Fig. 1) oder über die hohle Heizelektrode 19 (Fig. 2) eingeleitet werden. Auch die in der Flugasche und im Filterstaub enthaltenen Schwermetalloxide werden in der zweiten Heizkammer 3 zum Metall reduziert.

Aus der zweiten Heizkammer 3 gelangt die Schmelze 16 über den (ev. beheizten) Durchlass 33 in die dritte Heizkammer 4. In dieser Heizkammer 4 soll die Verweildauer und damit die Zeitdauer für Restreduktionen der Schwermetalloxide verlängert werden. Falls notwendig können hier nochmals spezielle Reduktionsmittel über die Lanze 57 (Fig. 2) zugeführt werden. Bei der Restreduktion noch anfallende flüchtige Schwermetalle verdampfen und werden als gasförmige Stoffe 39 über den Abzugskanal abgeführt und einer Reinigungsanlage zugeführt. Diese gasförmigen Stoffe 39 können gemeinsam mit den Schwermetalldämpfen oder gasförmigen Stoffen 26 aus der zweiten Heizkammer 3 abgeführt und gereinigt werden.

Die Schmelze 16 nichtflüchtiger Schwermetalle, hauptsächlich Eisen und Kupfer, sinkt im zylindrischen Behälter 45 (Fig. 1) oder im Sammelschacht 43 (Fig. 2) ab und wird dort als reduziertes Eisen an der Abstichöffnung 47 abgestochen. Ein Teil kann jedoch auch zurück in die zweite Heizkammer 3 fliessen und dort abgestochen werden. Die weitgehend von Schwermetallen befreite Schlackeschmelze 16 fliesst schlussendlich über den untergetauchten Syphon 51 zur Granulatgewinnung.

Die Heizelektroden 19, 20, 21 und 55 können jeweils aus Kohlenstoff (Graphit) oder aus Molybdän bestehen. Falls sie aus Kohlenstoff bestehen, hat die dargestellte vertikale Einführung der Heizelektroden in der jeweiligen Heizkammer 3 oder 4 den Vorteil, dass sie bei fortgeschrittener Oxidation der Heizelektrode, d.h. Abnützung, allmählich weiter in die Heizkammer gestossen werden können und so zeitlich gesehen zu einer Erwärmung der Schmelze mit konstanter Leistung führt.

Obwohl die zylindrische Form für die Heizkammern 2, 3 und 4 bevorzugt wird, können durchaus auch andere Formen zur Anwendung gelangen.

Die Flug- und Kesselasche und der Filterstaub können falls erwünscht auch in die erste Heizkammer 2 eingeführt werden. In diesem Fall sollen sie vorgängig zur Teilentfernung von Metallen einer sauren Wäsche oder Reduktionsschmelze unterzogen werden.

## Patentansprüche

1. Verfahren zur Aufbereitung von festen Rückständen aus Müllverbrennungsanlagen, wobei Schlacke aus der Müllverbrennung geschmolzen wird und Schwermetalle aus der Schmelze abgetrennt werden, dadurch gekennzeichnet, dass die Schlacke in eine erste Heizkammer (2) übergeführt und dort unter oxidierenden Bedingungen geschmolzen wird, danach die Schmelze in eine zweite Heizkammer (3) übergeführt wird, in welcher Schwermetallverbindungen zu ihrer metallischen Form reduziert werden und anschliessend die Schmelze (16) in eine dritte Heizkammer (4) weitergeführt wird, wobei die Schwermetall-Schmelze in der zweiten und dritten Heizkammer (3; 4) sedimentiert wird.

2. Verfahren nach Anspruch 1, dadurch gekennzeichnet, dass die in der Schlacke enthaltenen Metalle durch Einblasen von Sauerstoff (53) in die erste Heizkammer (2) im wesentlichen vollständig oxidiert werden.

3. Verfahren nach Anspruch 1 oder 2, dadurch gekennzeichnet, dass die bei der Oxidation der Metalle in der ersten Heizkammer (2) entstehende Reaktionswärme zur Erwärmung der Schlacke ausgenützt wird.

4. Verfahren nach einem der vorangehenden Ansprüche, dadurch gekennzeichnet, dass zur Reduktion der Metalle ein Reduktionsmittel in die zweite Heizkammer (3) eingeführt wird.

5. Verfahren nach einem der vorangehenden Ansprüche, dadurch gekennzeichnet, dass weitere feinteilige Rückstände, insbesondere Flugasche, Kesselasche und/oder Filterstäube der Schmelze (16) in der zweiten Heizkammer (3) zugeführt werden.

6. Verfahren nach Anspruch 5, dadurch gekennzeichnet, dass die weiteren feinteiligen Rückstände in einer zusätzlichen Heizkammer geschmolzen und als Schmelze in die zweite Heizkammer (3) eingeführt werden.

7. Verfahren nach Anspruch 5, dadurch gekennzeichnet, dass die weiteren feinteiligen Rückstände zu Presslingen verdichtet werden, bevor sie der Schmelze (16) in der zweiten Heizkammer (3) zugeführt werden.

8. Verfahren nach einem der vorangehenden Ansprüche, dadurch gekennzeichnet, dass im oberen Bereich (27; 40) der zweiten und/oder der dritten Heizkammer (3; 4) ein reduzierendes oder bezüglich der Schmelze (16) inertes Schutzgas eingeleitet wird.

9. Verfahren nach einem der vorangehenden Ansprüche, dadurch gekennzeichnet, dass in der ersten Heizkammer (2) entstehenden gasförmigen Stoffe (15) in die Müllverbrennungsanlage zurückgeführt werden.

10. Vorrichtung zur Durchführung des Verfahrens nach einem der Ansprüche 1 bis 9, dadurch gekennzeichnet, dass eine erste Heizkammer (2) mit einer Heizeinrichtung (9, 10) und einer Einrichtung zur Zuführung eines Oxydationsmittels, eine zweite Heizkammer (3) mit einer elektrischen Heizeinrichtung und einer Einrichtung zur Erzeugung reduzierender Bedingungen und eine dritte Heizkammer (4) mit einer elektrischen Heizeinrichtung vorgesehen sind, wobei die erste (2) und die zweite Heizkammer (3) über einen ersten Durchlass (17) und die zweite (3) und die dritte Heizkammer (4) über einen zweiten Durchlass (33) miteinander verbunden sind, dass mindestens in der zweiten Heizkammer (3) im unteren Bereich eine Abstichöffnung (23) für die Metallschmelze vorgesehen ist, und dass die dritte Heizkammer (4) seitlich einen Auslass (50) für die Entnahme der im wesentlichen schwermetallfreien Schmelze aufweist.

11. Vorrichtung nach Anspruch 10, dadurch gekennzeichnet, dass die erste Heizkammer (2) im oberen Bereich einen Oberofen (13) aufweist, in welchem nach unten gerichtete Sauerstoffbrenner (9, 10) vorgesehen sind.

12. Vorrichtung nach Anspruch 11, dadurch gekennzeichnet, dass im unteren Bereich der ersten Heizkammer (2) ein Sammelschacht (11) für die Schwermetallschmelze vorgesehen ist, in die Zuführelemente (52) für Sauerstoff enden.

13. Vorrichtung nach einem der Ansprüche 10 bis 12, dadurch gekennzeichnet, dass die zweite Heizkammer (3) und die dritte Heizkammer (4) jeweils im oberen Bereich einen Oberofen (27, 40) enthält, in welchen von oben her zumindest eine Heizelektrode (20, 21; 19; 55) in die Schmelze (16) hineinragt.

14. Vorrichtung nach Anspruch 13, dadurch gekennzeichnet, dass die Heizelektrode (20, 21; 19) eine Graphit-Elektrode ist.

15. Vorrichtung nach Anspruch 13 oder 14, dadurch gekennzeichnet, dass eine geschlossene Förderschnecke (31) gasdicht in die zweite Heizkammer (3) mündet.

16. Vorrichtung nach Anspruch 13 oder 14, dadurch gekennzeichnet, dass die Heizelektrode (19) hohlzylindrisch ausgebildet ist und ein Zuführkanal für das Eintragen der feinteiligen Rückstände bildet.

17. Vorrichtung nach einem der Ansprüche 10 bis 16, dadurch gekennzeichnet, dass im unteren Bereich der dritten Heizkammer (4) eine Abstichöffnung (47) für die Metallschmelze vorgesehen ist.

18. Vorrichtung nach einem der Ansprüche 10 bis 17, dadurch gekennzeichnet, dass der Auslass (50) in der dritten Heizkammer (4) leicht ansteigend mit einem beheizbaren Syphon (51) ausgebildet ist.

## Claims

1. Method for processing solid residues from waste-incineration plants, in which slag from the waste incineration is melted and heavy metals are separated out of the molten material, characterized in that the slag is transferred into a first heating chamber (2), where it is melted under oxidizing conditions, then the molten material is transferred into a second heating chamber (3), in which heavy-metal compounds are reduced to their metallic form, and then the molten material (16) is guided onwards into a third heating chamber (4), the heavy-metal molten material being sedimented in the second and third heating chambers (3; 4).

2. Method according to Claim 1, characterized in that the metals which are contained in the slag are substantially completely oxidized as a result of oxygen (53) being blown into the first heating chamber (2).

3. Method according to Claim 1 or 2, characterized in that the heat of reaction which is generated during the oxidation of the metals in the first heating chamber (2) is utilized to heat the slag.

4. Method according to one of the preceding claims, characterized in that a reducing agent is introduced into the second heating chamber (3) in order to reduce the metals.

5. Method according to one of the preceding claims, characterized in that further finely particulate residues, in particular fly ash, boiler ash and/or filter dust materials are fed to the molten material (16) in the second heating chamber (3).

6. Method according to Claim 5, characterized in that the further finely particulate residues are melted in an additional heating chamber and are introduced into the second heating chamber (3) as molten material.

7. Method according to Claim 5, characterized in that the further finely particulate residues are compacted to form pressed bodies before they are supplied to the molten material (16) in the second heating chamber (3).

8. Method according to one of the preceding claims, characterized in that a shielding gas which has a reducing action or is inert with regard to the molten material (16) is introduced in the upper area (27; 40) of the second and/or the third heating chamber (3; 4).

9. Method according to one of the preceding claims, characterized in that gaseous substances (15) which form in the first heating chamber (2) are returned to the waste-incineration plant.

10. Device for carrying out the method according to one of Claims 1 to 9, characterized in that a first heating chamber (2), with a heater device (9, 10) and a device for supplying an oxidizing agent, a second heating chamber (3), with an electrical heater device and a device for reducing conditions, and a third heating chamber (4), with an electrical heater device, are provided, the first heating chamber (2) and the second heating chamber (3) being connected to one another via a first passage (17), and the second heating chamber (3) and the third heating chamber (4) being connected to one another via a second passage (33), in that a tapping opening (23) for the molten metal is provided in the lower area of at least the second heating chamber (3), and in that the third heating chamber (4), on the side, has an outlet (50) for removing the molten material which is substantially free of heavy metals.

11. Device according to Claim 10, characterized in that the first heating chamber (2) has in its upper area a top furnace (13) in which downwardly directed oxygen burners (9, 10) are provided.

12. Device according to Claim 11, characterized in that a collecting shaft (11) for the molten heavy metals is provided in the lower area of the first heating chamber (2), in which supply elements (52) for oxygen end.

13. Device according to one of Claims 10 to 12, characterized in that the second heating chamber (3) and the third heating chamber (4) each contain, in the upper area, a top furnace (27, 40), in which at least one heating electrode (20, 21; 19; 55) projects into the molten material (16) from above.

14. Device according to Claim 13, characterized in that the heating electrode (20, 21; 19) is a graphite electrode.

15. Device according to Claim 13 or 14, characterized in that a closed worm conveyor (31) opens out in a gastight manner into the second heating chamber (3).

16. Device according to Claim 13 or 14, characterized in that the heating electrode (19) is designed in the form of a hollow cylinder and forms a supply duct for the introduction of the finely particulate residues.

17. Device according to one of Claims 10 to 16, characterized in that a tapping opening (47) for the molten metal is provided in the lower area of the third heating chamber (4).

18. Device according to one of Claims 10 to 17, characterized in that the outlet (50) in the third heating chamber (4) is designed so that it rises slightly, with a heatable siphon (51).

## Revendications

1. Procédé de traitement de résidus solides d'installations d'incinération d'ordures, dans lequel les scories de l'incinération sont fondues et leurs métaux lourds sont séparés de la masse en fusion, caractérisé en ce que les scories sont introduites dans une première chambre de chauffe (2) pour y être fondues dans des conditions oxydantes, puis la masse en fusion est introduite dans une deuxième chambre de chauffe (3), dans laquelle les composés de métaux lourds subissent une réduction ramenant ceux-ci à leur forme métallique, la masse en fusion (16) est ensuite dirigée vers une troisième chambre de chauffe (4), les métaux lourds en fusion sédimentant au cours de ces opérations dans les chambres de chauffe (3 ; 4).

2. Procédé selon revendication 1, caractérisé en ce que les métaux contenus dans les scories sont pour l'essentiel totalement oxydés dans la première chambre de chauffe (2) par insufflation d'oxygène(53).

3. Procédé selon revendication 1 ou 2, caractérisé en ce que la chaleur de réaction produite par l'oxydation des métaux dans la première chambre de chauffe (2) est utilisée pour chauffer les scories.

4. Procédé selon une des revendications précédentes, caractérisé en ce que un matériau réducteur est introduit dans la deuxième chambre de chauffe (3) en vue de la réduction des métaux.

5. Procédé selon une des revendications précédentes, caractérisé en ce que d'autres résidus fins, en particulier des cendres volantes, des cendres de chaudières et/ou des poussières de filtres, sont ajoutés à la masse en fusion (16) dans la deuxième chambre de chauffe (3) .

6. Procédé selon revendication 5, caractérisé en ce que ces autres résidus fins sont fondus dans une chambre de chauffe additionnelle et introduits dans la deuxième chambre de chauffe (3) à l'état de masse en fusion.

7. Procédé selon revendication 5, caractérisé en ce que ces autres résidus fins sont densifiés sous forme de pièces agglomérées avant d'être ajoutés à la masse en fusion (16) dans la deuxième chambre de chauffe (3).

8. Procédé selon une des revendications précédentes, caractérisé en ce que dans la partie supérieure (27 ; 40) de la deuxième et/ou troisième chambre de chauffe (3 ; 4), un gaz de protection réducteur ou inerte vis à vis de la masse en fusion (16) est introduit.

9. Procédé selon une des revendications précédentes, caractérisé en ce que les produits gazeux (15) générés dans la première chambre de chauffe (2) sont recyclés vers l'installation d'incinération.

10. Installation pour l'application du procédé selon une des revendications 1 à 9, caractérisée en ce que une première chambre de chauffe (2) avec équipement de chauffe (9, 10) et dispositif d'introduction d'un oxydant, une deuxième chambre de chauffe (3) avec équipement de chauffe électrique et dispositif de production de conditions réductrices, et une troisième chambre de chauffe (4) avec équipement de chauffe électrique, sont prévues, en ce que la première (2) et la deuxième chambre de chauffe (3) sont reliées par une première liaison (17), la deuxième (3) et la troisième chambre de chauffe (4) sont communicantes par une deuxième liaison (33), en ce que au moins la deuxième chambre de chauffe (3) possède à sa partie inférieure un trou de coulée (23) de la masse métallique en fusion, et que la troisième chambre de chauffe (4) possède une sortie latérale (50) pour l'évacuation de la masse en fusion, qui est pour l'essentiel libre de métaux lourds.

11. Installation selon revendication 10, caractérisée en ce que la première chambre de chauffe (2) possède à sa partie supérieure un espace de chauffe (13), dans lequel des brûleurs (9, 10), par insufflation d'oxygène et dirigés vers le bas, sont prévus.

12. Installation selon revendication 11, caractérisée en ce que la partie inférieure de la première chambre de chauffe (2) possède un puits de collecte (11) des métaux lourds en fusion, auquel aboutissent des éléments (52) pour l'introduction d'oxygène.

13. Installation selon une des revendications 10 à 12, caractérisée en ce que les parties supérieures de la deuxième chambre de chauffe (3) et de la troisième chambre de chauffe (4) possèdent chacune un espace de chauffe (27, 40) muni d'au moins une électrode de chauffe (20, 21 ; 19 ; 55) pénétrant par le haut dans la masse en fusion (16).

14. Installation selon revendication 13, caractérisée en ce que l'électrode de chauffe (20, 21 ; 19) est une électrode en graphite.

15. Installation selon revendications 13 ou 14, caractérisée en ce que un transporteur à vis (31), fermé et hermétique aux gaz, aboutit à la deuxième chambre de chauffe (3) .

16. Installation selon revendications 13 ou 14, caractérisée en ce que l'électrode de chauffe (19) est un cylindre creux et constitue un canal d'introduction des résidus fins.

17. Installation selon une des revendications 10 à 16, caractérisée en ce que un trou de coulée (47) de la masse métallique en fusion est prévu à la partie inférieure de la troisième chambre de chauffe (4).

18. Installation selon une des revendications 10 à 17, caractérisée en ce que la sortie (50) de la troisième chambre de chauffe (4) est constituée d'un siphon légèrement ascendant (51), qu'il est possible de chauffer.
